(19) Europäisches Patentamt
European Patent Office
Office européen des brevets

(11) **EP 2 128 723 A1**

(12) **DEMANDE DE BREVET EUROPEEN**

(43) Date de publication:
**02.12.2009 Bulletin 2009/49**

(51) Int Cl.:
**G04D 7/10** *(2006.01)*          **G01N 3/00** *(2006.01)*

(21) Numéro de dépôt: **08156978.2**

(22) Date de dépôt: **27.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **Sigatec SA**
**1950 Sion (CH)**

(72) Inventeurs:
• **Gygax, Pierre**
  **2016, Cortaillod (CH)**
• **Glassey, Marc-André**
  **1967, Bramois (CH)**

(74) Mandataire: **BOVARD AG**
**Optingenstrasse 16**
**3000 Bern 25 (CH)**

(54) **Procédé de fabrication ou d'assemblage d'un oscillateur et oscillateur obtenu selon ce procédé**

(57)    La présente invention concerne un procédé de fabrication d'un oscillateur comportant un ressort spiral et un balancier, consistant à obtenir avec précision une fréquence d'oscillation donnée dudit oscillateur, **caractérisé en ce qu**'il consiste à :
- déterminer les moments d'inertie de différents balanciers,
- mesurer le couple élastique du ressort spiral,
- et choisir parmi l'ensemble des balanciers, celui dont la valeur du moment d'inertie permet, en association avec le ressort spiral présentant un tel couple élastique mesuré, de constituer un oscillateur présentant la fréquence d'oscillation donnée.

La présente invention concerne également un dispositif de mesure de couple élastique d'un ressort spiral pouvant être utilisé dans la réalisation du procédé conforme à l'invention.

Fig. 1

## Description

La présente invention se rapporte au domaine technique général des oscillateurs mécaniques, utilisés notamment dans l'horlogerie.

La présente invention concerne plus particulièrement des oscillateurs comportant un ressort spiral et un balancier.

Il est connu d'utiliser la méthode dit d'appairage pour fabriquer ou d'assembler des oscillateurs. Dans cette méthode, on cherche notamment à trouver une combinaison du balancier et du ressort spiral qui résulte en une fréquence d'oscillation recherchée de l'ensemble de l'oscillateur.

Cependant, les méthodes de fabrication connues des ressorts spiraux ne sont pas suffisamment précises pour garantir qu'un oscillateur présente une fréquence d'oscillation déterminée et conforme aux exigences de l'horlogerie.

On connait ainsi la méthode consistant à mesurer la fréquence d'oscillation d'un ressort spiral monté sur un balancier de référence. Cette méthode de mesure dynamique n'est pas satisfaisante.

L'objet de la présente invention vise donc à proposer un nouveau procédé de fabrication ne présentant pas les inconvénients des méthodes connues, et permettant d'obtenir avec précision des fréquences d'oscillations pour les oscillateurs.

Un autre objet de la présente invention vise à proposer un procédé de fabrication et/ou d'assemblage d'oscillateurs mécaniques plus simples à mettre en oeuvre et moins coûteux.

Un autre objet de la présente invention vise à proposer un procédé de fabrication permettant d'effectuer des mesures de couple élastique du ressort spiral gravé par exemple dans du silicium, et non encore séparé de son substrat.

Il est également l'objet de la présente invention à proposer un nouveau dispositif de mesure de couple élastique d'un ressort spiral qui peut notamment être utilisé dans la réalisation du procédé conforme à l'invention.

Les objets assignés à l'invention sont atteints à l'aide d'un procédé de fabrication d'un oscillateur comportant un ressort spiral et un balancier, consistant à obtenir avec précision une fréquence d'oscillation recherchée dudit oscillateur, **caractérisé en ce qu'**il consiste à :

- déterminer les moments d'inertie de différents balanciers,

- mesurer le couple élastique de différents ressorts spiraux et classifier lesdits ressorts spiraux en fonction des valeurs des couples élastiques mesurés,

- et choisir parmi l'ensemble des balanciers, celui dont la valeur du moment d'inertie permet, en association avec l'un des ressorts spiraux présentant un couple élastique mesuré déterminé afin de constituer un oscillateur présentant la fréquence d'oscillation recherchée.

Selon un exemple de mise en oeuvre conforme à l'invention, la mesure du couple élastique du ressort spiral consiste à :

- disposer un ressort spiral de référence sur un système de rotation,

- relier la virole du ressort spiral de référence à la virole du ressort spiral par l'intermédiaire d'un axe rigide,

- appliquer une rotation au ressort spiral de référence grâce au système de rotation, ledit couple étant transmis par l'intermédiaire de l'axe au ressort spiral,

- effectuer une mesure différentielle des angles de rotations obtenus sur le ressort spiral et sur le ressort spiral de référence,

- et utiliser cette mesure pour calculer le couple élastique du ressort spiral.

Selon un exemple de mise en oeuvre, la mesure du couple élastique consiste à appliquer une rotation à l'extrémité périphérique du ressort spiral de référence, grâce à un bras relié à un organe de commande manuel ou à un moteur du système de rotation. Selon un autre exemple de mise en oeuvre, présentant également des propriétés avantageuses, la mesure du couple élastique consiste à appliquer une rotation au centre du ressort spiral de référence et de transmettre le couple de celui-ci au ressort spiral par intermédiaire d'un bras.

Selon un exemple de mise en oeuvre, le procédé de fabrication conforme à l'invention consiste à effectuer des mesures du couple élastique du ressort spiral porté à des températures différentes, déterminant ainsi des propriétés mécaniques à différentes températures.

Selon un exemple de mise en oeuvre, le procédé de fabrication consiste à effectuer les mesures de couple de ressorts spiraux gravés et toujours disposés dans leur substrat.

Selon un exemple de mise en oeuvre, le procédé de fabrication consiste, à l'issue des opérations de mesure, à séparer le ressort spiral de son substrat en le découpant avec une longueur prédéfinie.

Selon un autre exemple de mise en oeuvre, le procédé de fabrication consiste, à l'issue des opérations de mesure, à séparer le ressort spiral de son substrat en le découpant avec une longueur choisie en fonction du moment d'inertie du balancier auquel il va être associé. Ce choix peut notamment être effectué par biais d'un calcul de la longueur du ressort spiral en fonction du moment d'inertie du balancier auquel il va être associé et du couple mesuré, afin d'obtenir la fréquence d'oscillation désirée.

Les objets assignés à l'invention sont également atteints à l'aide d'un oscillateur mécanique comportant un balancier et un ressort spiral, **caractérisé en ce qu**'il est fabriqué ou assemblé selon le procédé de fabrication précisé ci-dessus.

L'oscillateur mécanique conforme à l'invention est par exemple destiné à l'horlogerie.

Il faut mentionner que la présente invention se réfère également à un dispositif de mesure de couple élastique d'un ressort spiral, **caractérisé en ce qu**'il comprend :

- un moyen de soutien d'un ressort spiral de référence,

- un système de rotation apte à appliquer une rotation autour d'un angle prédéterminé au ressort spiral et au ressort spiral de référence,

- un moyen de mesure (2) différentielle de l'angle de rotation obtenu sur le ressort spiral et de l'angle de rotation imposé au ressort spiral de référence, et

- un moyen de calcul du couple élastique du ressort spiral utilisant la mesure effectuée par le moyen de mesure.

Selon un exemple de mise en oeuvre conforme à l'invention, le système de rotation comprend :

- un moyen moteur,

- un axe rigide pour relier la virole du ressort spiral de référence à la virole du ressort spiral, et

- un bras relié au moyen moteur pour appliquer une rotation au ressort spiral de référence.

Selon un autre exemple de mise en oeuvre conforme à l'invention, le système de rotation comprend :

- un moyen moteur,

- un axe rigide pour relier la virole du ressort spiral de référence au moyen moteur, et

- un bras relié au ressort spiral de référence pour transmettre le couple de celui-ci au ressort spiral.

Le moyen de mesure peut notamment comprendre une caméra.

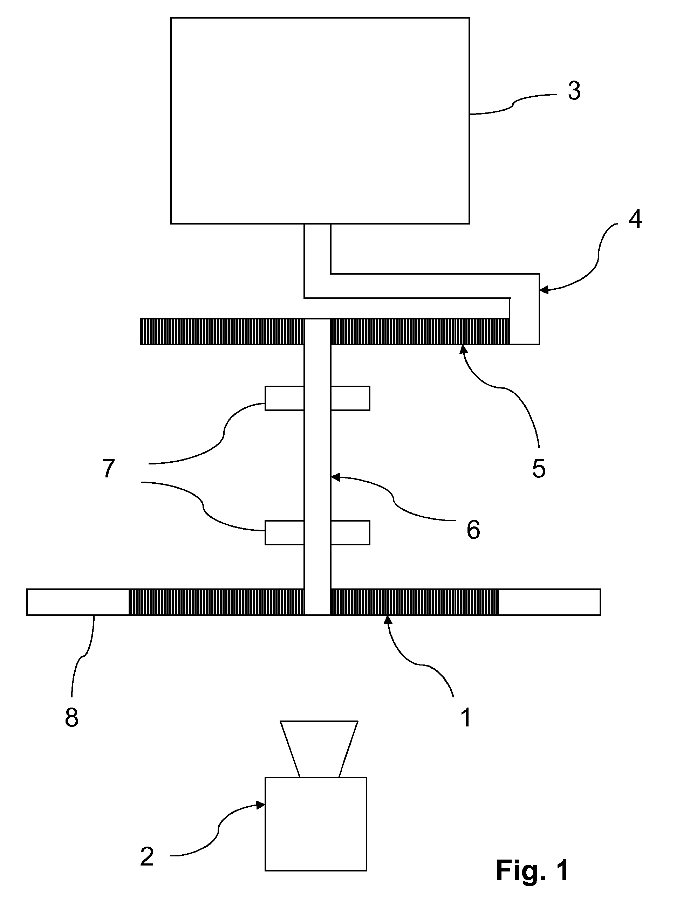

L'invention et ses avantages apparaîtront avec plus de détails dans le cadre de la description qui suit avec un exemple de réalisation donné à titre illustratif et non limitatif, en référence à la figure 1 annexée qui illustre un exemple de mise en oeuvre d'une partie du procédé de fabrication conforme à l'invention.

La figure 1 illustre donc en partie une méthode de fabrication d'un oscillateur mécanique comportant un ressort spiral 1 et un balancier non représenté.

Par fabrication, il convient d'entendre au sens large des étapes de fabrication de parties de l'oscillateur ainsi que des étapes d'assemblage de parties de l'oscillateur.

Le procédé de fabrication conforme à l'invention comporte une méthode de mesure du couple élastique du ressort spiral 1. Cette mesure est obtenue en utilisant un système de rotation et un moyen de lecture d'angles 2, du genre caméra.

Le système de rotation comprend un moteur 3 destiné à entraîner en rotation un bras 4 relié à un ressort spiral de référence 5.

Le système de rotation comprend également un axe 6 reliant les viroles respectives du ressort spiral 1 et du ressort spiral de référence 5. L'axe 6 est lié intimement au ressort spiral de référence 5 de manière à empêcher tout glissement, frottement ou rotation dans la virole. L'axe entraîne le ressort spiral à mesurer 1 soit par serrage soit par une forme non circulaire garantissant l'entraînement.

L'axe 6 comporte par exemple des paliers 7. Ces dernies doivent être de très grande qualité, c'est-à-dire avec peu de frottement car le couple de frottement des paliers diminue la précision de mesure.

Le ressort spiral 1 est par exemple gravé dans un substrat 8 du genre silicium. Le ressort spiral 1 reste solidaire de son substrat 8, au moins par la partie externe, pour effectuer les mesures de couple élastique. Après les mesures, le ressort spiral 1 est séparé de son substrat 8 en découpant sa partie externe qui est encore liée au restant du substrat 8.

Le bras 4 est avantageusement fixé à l'extrémité périphérique du ressort spiral de référence 5 pour lui appliquer un couple.

Le système de rotation peut également être à entraînement manuel en remplacement du moteur 3.

Les angles de rotation peuvent également être mesurés visuellement, par analyse d'images ou par l'intermédiaire d'un microscope.

Le procédé de fabrication conforme à l'invention comprend une étape consistant à mesurer le couple élastique de différents ressorts spiraux 1 et de les classifier en fonction des valeurs des couples élastiques mesurés.

Une autre étape consiste à effectuer un appairage d'un ressort spiral 1 et d'un balancier présentant un moment d'inertie déterminé, pour constituer un oscillateur mécanique fournissant une fréquence d'oscillation déterminée.

La mesure du couple élastique du ressort spiral 1 consiste à disposer un ressort spiral de référence 5 sur le système de rotation et à relier la virole du ressort spiral de référence 5 à la virole du ressort spiral 1 par l'intermédiaire de l'axe rigide 6.

On applique ensuite un couple au ressort spiral de référence 5 grâce au système de rotation, ledit couple étant transmis par l'intermédiaire de l'axe 6 au ressort spiral 1.

On effectue ensuite une mesure différentielle des angles de rotations obtenus sur le ressort spiral 1 et sur le ressort spiral de référence 5.

Une autre étape consiste à utiliser cette mesure pour calculer le couple élastique *M'* du ressort spiral 1, et ce avec la formule :

$$M' = \frac{M \times a}{a'}$$

basée sur l'équilibre des couples, dans laquelle M est le couple élastique du ressort spiral de référence 5, a étant l'angle de rotation du ressort spiral de référence 5 (ce qui correspond à la différence d'angle entre le moteur 3 et la position de l'axe 6) et a' étant l'angle mesuré sur le ressort spiral 1.

La mesure des angles peut notamment se faire de la manière suivante : au niveau de l'angle donné la rotation peut être mesurée à l'aide d'un encodeur fixé au moteur 3. Le deuxième angle peut être mesuré à l'aide d'une caméra 2, soit en plaçant des points de référence sur la virole soit par analyse d'image.

A titre d'exemple, si le couple élastique *M'* du ressort spiral 1 est inférieur au couple élastique *M* du ressort spiral de référence 5, l'angle observé a'sera plus grand que l'angle *a*. Egalement, si les couples élastiques *M'* et *M* sont équivalents, la rotation du ressort spiral à mesurer 1 et du ressort spiral de référence 5 sera équivalente. Lors d'une rotation du moteur 3 de 360°, on mesurera a = a'.

Dans un cas extrême, non réaliste, mais indiqué à titre informatif, si le couple du ressort spiral de référence 5 est infini (c'est-à-dire dans le cas d'une transmission directe sans ressort), lors d'une rotation du moteur 3 de 360°, on mesurera a = 0 et a' = 360°.

La mesure du couple élastique consiste à appliquer un couple à l'extrémité périphérique du ressort spiral de référence 5, grâce au bras 4 relié à un organe de commande manuel ou au moteur 3 du système de rotation.

Selon un exemple de mise en oeuvre, le procédé consiste à effectuer des mesures du couple élastique du ressort spiral 1 porté à des températures différentes, déterminant ainsi des propriétés mécaniques à différentes températures et notamment des valeurs de couple élastique pour de températures différentes. Ces mesures peuvent être effectuées par exemple à l'intérieur d'une étuve associée à un système de régulation de température.

Selon un exemple de mise en oeuvre, le procédé consiste à effectuer les mesures de couple élastique de ressorts spiraux 1 gravés et toujours disposés dans leur substrat 8. On évite ainsi de découper le ressort spiral 1 pour entreprendre les mesures et on s'affranchit d'opérations de manipulations plus complexes dudit ressort spiral 1. En outre, la position du spiral, plus précisément la position de l'attache externe au substrat, est parfaitement connue.

Le procédé consiste ensuite, à l'issue des opérations de mesure, à séparer le ressort spiral 1 de son substrat 8 en le découpant avec une longueur prédéfinie.

Selon un autre exemple de mise en oeuvre, le procédé consiste, à l'issue des opérations de mesure, à séparer le ressort spiral 1 de son substrat 8 en le découpant avec une longueur choisie en fonction du moment d'inertie du balancier auquel il va être associé. On peut ainsi obtenir une fréquence d'oscillation de l'oscillateur mécanique, avec encore plus de précision. On peut adapter ainsi un ressort spiral 1 à un balancier particulier auquel il est destiné.

Le procédé conforme à l'invention présente l'avantage de fournir une mesure rapide. En effet, la mesure du couple élastique est une mesure statique effectuée plus rapidement qu'une mesure dynamique.

Un autre avantage est obtenu de par la possibilité d'effectuer des mesures sur un support ou substrat 8. On évite ainsi un montage individuel de chaque ressort spiral 1 sur son balancier de référence pour effectuer des mesures. Le procédé conforme à l'invention procure ainsi un gain de temps et une réduction des coûts de fabrication.

Un autre avantage est obtenu avec la possibilité de découper le ressort spiral 1 après les mesures, pour ajuster avec précision sa longueur et par conséquent pour optimiser l'association du ressort spiral 1 avec un balancier.

Naturellement, la présente invention est sujette à de nombreuses variations quant à sa mise en oeuvre. Bien que plusieurs modes de réalisations et de mise en oeuvre aient été décrits, on comprend bien qu'il n'est pas concevable d'identifier de manière exhaustive tous les modes possibles. Il est bien sûr envisageable de remplacer un moyen décrit ou une étape décrite par un moyen équivalent ou une étape équivalente sans sortir du cadre de la présente invention.

**Revendications**

1. Procédé de fabrication d'un oscillateur comportant un ressort spiral (1) et un balancier, consistant à obtenir avec précision une fréquence d'oscillation recherchée dudit oscillateur,
   **caractérisé en ce qu'**il consiste à :

   - déterminer les moments d'inertie de différents balanciers,
   - mesurer le couple élastique de différents ressorts spiraux (1) et classifier lesdits ressorts spiraux en fonction des valeurs des couples élastiques mesurées,
   - et choisir parmi l'ensemble des balanciers, celui dont la valeur du moment d'inertie permet, en association avec l'un des ressorts spiraux (1) présentant un couple élastique mesuré déterminé, afin de constituer un oscillateur présentant la fréquence d'oscillation recherchée.

**2.** Procédé de fabrication selon la revendication 1, **caractérisé en ce que** la mesure du couple élastique du ressort spiral (1) consiste à :

- disposer un ressort spiral de référence (5) sur un système de rotation,
- relier la virole du ressort spiral de référence (5) à la virole du ressort spiral (1) par l'intermédiaire d'un axe rigide (6),
- appliquer une rotation au ressort spiral de référence (5) grâce au système de rotation, ledit couple étant transmis par l'intermédiaire de l'axe (6) au ressort spiral (1),
- effectuer une mesure différentielle de l'angle de rotation obtenu sur le ressort spiral (1) et de l'angle de rotation imposé au ressort spiral de référence (5),
- et utiliser cette mesure pour calculer le couple élastique du ressort spiral (1).

**3.** Procédé de fabrication selon la revendication 1 ou 2, **caractérisé en ce que** la mesure du couple élastique consiste à appliquer une rotation à l'extrémité périphérique du ressort spiral de référence (5), grâce à un bras (4) relié à un organe de commande manuel ou à un moteur (3) du système de rotation.

**4.** Procédé de fabrication selon la revendication 1 ou 2, **caractérisé en ce que** la mesure du couple élastique consiste à appliquer une rotation au centre du ressort spiral de référence (5) et de transmettre le couple de celui-ci au ressort spiral (1) par intermédiaire d'un bras.

**5.** Procédé de fabrication selon l'une quelconque des revendications précédentes, **caractérisé en ce qu'**il consiste à effectuer des mesures du couple élastique du ressort spiral (1) porté à des températures différentes, déterminant ainsi des propriétés mécaniques à différentes températures.

**6.** Procédé de fabrication selon l'une quelconque des revendications 1 à 5, **caractérisé en ce qu'**il consiste à effectuer les mesures de couple de ressorts spiraux (1) gravés et toujours disposés dans leur substrat (8).

**7.** Procédé de fabrication selon la revendication 6, **caractérisé en ce qu'**il consiste, à l'issue des opérations de mesure, à séparer le ressort spiral (1) de son substrat (8) en le découpant avec une longueur prédéfinie.

**8.** Procédé de fabrication selon la revendication 6, **caractérisé en ce qu'**il consiste, à l'issue des opérations de mesure, à séparer le ressort spiral (1) de son substrat (8) en le découpant avec une longueur choisie en fonction du moment d'inertie du balancier auquel il va être associé.

**9.** Oscillateur mécanique comportant un balancier et un ressort spiral (1), **caractérisé en ce qu'**il est fabriqué et/ou assemblé selon le procédé conforme à l'une quelconque des revendications 1 à 8.

**10.** Oscillateur mécanique selon la revendication 9, **caractérisé en ce qu'**il est destiné à l'horlogerie.

**11.** Dispositif de mesure de couple élastique d'un ressort spiral (1), **caractérisé en ce qu'**il comprend :

- un moyen de soutien d'un ressort spiral de référence (5),
- un système de rotation (3, 4, 6) apte à appliquer une rotation autour d'un angle prédéterminé au ressort spiral (1) et au ressort spiral de référence (5),
- un moyen de mesure (2) différentielle de l'angle de rotation obtenu sur le ressort spiral (1) et de l'angle de rotation imposé au ressort spiral de référence (5), et
- un moyen de calcul du couple élastique du ressort spiral (1) utilisant la mesure effectuée par le moyen de mesure.

**12.** Dispositif de mesure selon la revendication 11, **caractérisé en ce que** le système de rotation comprend :

- un moyen moteur (3),
- un axe rigide (6) pour relier la virole du ressort spiral de référence (5) à la virole du ressort spiral (1), et
- un bras (4) relié au moyen moteur (3) pour appliquer une rotation au ressort spiral de référence (5).

**13.** Dispositif de mesure selon la revendication 11, **caractérisé en ce que** le système de rotation comprend :

- un moyen moteur (3),
- un axe rigide (6) pour relier la virole du ressort spiral de référence (5) au moyen moteur, et
- un bras (4) relié au ressort spiral de référence (5) pour transmettre le couple de celui-ci au ressort spiral (1).

**14.** Dispositif de mesure selon l'une des revendications 11 ou 12, **caractérisé en ce que** le moyen de calcul comprend une caméra.

Fig. 1

Europäisches
Patentamt

European
Patent Office

Office européen
des brevets

## RAPPORT DE RECHERCHE EUROPEENNE

Numéro de la demande

EP 08 15 6978

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | REYMONDIN ET AL.: "Théorie d'horlogerie" 1998, EDITIONS DE LA FET , LAUSANNE , XP002511514 | 1,5,9,10 | INV. G04D7/10 G01N3/00 |
| Y | * page 146, alinéa 7.9.2 * | 2-4 | |
| A | * figures 7--52,7--53,7--54 * | 6-8, 11-14 | |
| | ----- | | |
| Y | US 2 384 520 A (FAY ALLER WILLIS) 11 septembre 1945 (1945-09-11) | 2-4 | |
| X | * figures 1-4 * | 11-14 | |
| A | * page 1, colonne de gauche, ligne 33 - page 2, colonne de droite, ligne 2 * | 5-8 | |
| | ----- | | |
| X | FR 1 502 464 A (STRAUMANN INST AG) 18 novembre 1967 (1967-11-18) * page 1, colonne de gauche, alinéa 2 * | 1,9,10 | |
| | ----- | | |
| X | FR 748 636 A (DONAT, A) 6 juillet 1933 (1933-07-06) * le document en entier * | 11 | |
| | ----- | | |

DOMAINES TECHNIQUES RECHERCHES (IPC)

G04D
G04B
G01N

Le présent rapport a été établi pour toutes les revendications

| Lieu de la recherche | Date d'achèvement de la recherche | Examinateur |
|---|---|---|
| La Haye | 22 janvier 2009 | Burns, Mike |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 2 128 723 A1

**ANNEXE AU RAPPORT DE RECHERCHE EUROPEENNE
RELATIF A LA DEMANDE DE BREVET EUROPEEN NO.**

EP 08 15 6978

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-01-2009

| Document brevet cité au rapport de recherche | | Date de publication | Membre(s) de la famille de brevet(s) | | Date de publication |
|---|---|---|---|---|---|
| US 2384520 | A | 11-09-1945 | AUCUN | | |
| FR 1502464 | A | 18-11-1967 | CH | 483050 A | 29-08-1969 |
| | | | CH | 1342866 D | 29-08-1969 |
| | | | DE | 1962877 U | 22-06-1967 |
| FR 748636 | A | 06-07-1933 | AUCUN | | |

EPO FORM P0460